# EUROPEAN PATENT APPLICATION

(11) **EP 0 807 550 A2**
(43) Date of publication of application: **19.11.1997**
(21) Application number: 97104440.9
(22) Date of filing: 15.03.1997
(51) Int. Cl.: B60Q 1/46

(54) **Electronic flasher system**

(30) Priority: 18.04.1996 JP 121021/96; 18.04.1996 JP 121022/96; 18.04.1996 JP 121023/96
(71) Applicant: Niles Parts Co., Ltd., Tokyo 143 (JP)
(72) Inventor: Ohkuma, Sakae, Ohta-ku, Tokyo, 143 (JP)
(74) Representative: Schüler, Horst, Dr.

(57) **Abstract**

A combination switch unit (2) for use in a vehicle flasher system includes a semiconductor switch unit (21 L, 21 R) controlling supply of current to direction indication lamps (1L, 1R). Control terminals of the semiconductor switch (21 L, 21 R) are activated by a flasher circuit (21 A) operating in response to actuation of a turn signal switch (22) and hazard switches (3, 23). In a turn signal flashing mode the flasher circuit (21A) also intermittently activates a sound source (25) forming part of the combination switch unit (2). One (3) of the hazard switches is an external component and is arranged in a region of the vehicle being accessible to a person not sitting in the driver's seat.

## Description

The present invention relates to an electronic flasher unit in accordance with the precharacterizing part of claim 1.

Such flasher systems unit comprise a semiconductor switch unit which controls current supply to direction indication lamps in two different modes, a turn signal flashing mode, wherein only those direction indication lamps are energized, which are mounted on the left or right side of the vehicle, and a hazard flashing mode, wherein all the direction indication lamps are energized simultaneously. The operating modes of the flasher system are established in response to operation of a turn signal switch and a hazard switch, respectively.

A conventional electronic flasher unit showing the features enumerated in the precharacterizing part of claim 1 is disclosed in Japanese laid-open patent publications No. SHO 64-90831 and No. HEI 2-164629. This flasher unit includes a semiconductor switch unit connected to the direction indicating lamps on one hand and connected to the battery of the vehicle on the other hand. The system includes a flasher circuit for supplying an intermittent control signal to the semiconductor switch unit, which is intermittently actuated thereby and controls the supply of current to the direction indication lamps correspondingly which are thus caused to flash.

In accordance with still older prior art there are mechanical flasher units using release and valve springs for controlling the supply of current to the direction indication lamps. In such mechanical flasher units actuation of the release simultaneously results in the generation of sound so that the driver of the vehicle can easily check correct operation of the flasher unit by audio control. However, in electronic flasher systems of the type disclosed in the above mentioned references, no sound is produced simultaneously with the supply of current to the direction indication lamps, since the semiconductor switch unit operates quietly. For this reason Japanese laid-open publication No. SHO 55-87630 proposes to utilize a speaker of a car stereo system or to provide an extra buzzer for providing actuation sound which is interlocked with operation of the flasher system thus providing for audible control of the operation of the flasher unit.

Consequently it is the object of the present invention to provide an electronic flasher unit controlling current supply to direction indication lamps and including a semiconductor switch unit carrying out such control, and having integrated components for producing sound reflecting operation of the flasher unit.

The above object in accordance with the present invention is solved by an electronic flasher unit showing the features enumerated in claim 1.

Further advantageous improvements of the invention are referred to in the subclaims.

Preferred embodiments of the invention will now be described in more detail referring to the drawings. Therein
- figure 1:: is an electric circuit diagram showing a first electronic flasher system embodying the present invention;
- figure 2:: is an electric circuit diagram showing a second electronic flasher system in embodying the present invention; and
- figure 3:: is a perspective view illustrating the external appearance of a flasher module shown in figure 2 which has a component which at the same time fulfils the function of an electric current detection resistor and of a sound source, figure 3 (a) showing the state of this component, when it is not heated, while figure 3 (b) shows the state, where the component is heated by current flowing therethrough and is deformed thereby so as to collide with a projecting abutment member formed on the housing of the flasher module.

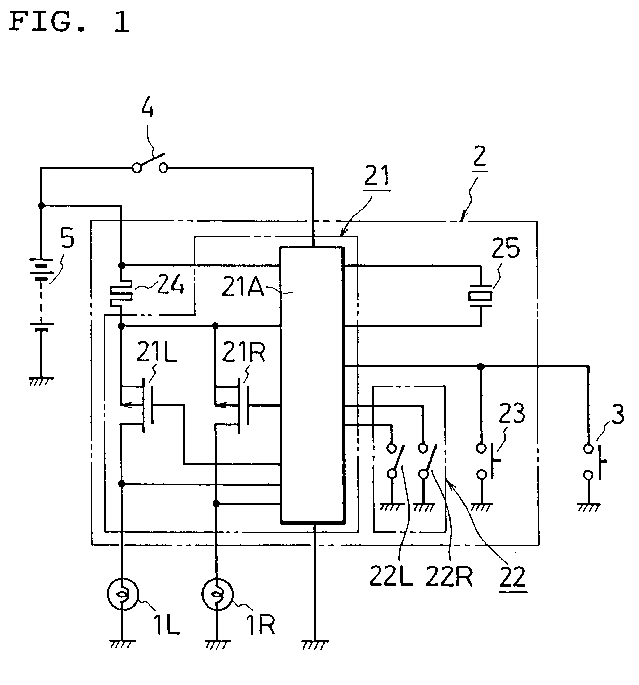

The electronic flasher system shown in figure 1 includes direction indication lamps 1R and 1L, which are provided on the left and right hand side of a vehicle body, respectively. For sake of simplicity, only one lamp is shown in the drawings, it being understood, that this lamp represents all light indication lamps associated to the respective side of the vehicle. The lamps 1R and 1L are connected to output terminals of a combination switch unit 2, which has a housing or body not shown in detail in the drawings, which is mounted on a steering column of the vehicle by means of a harness. The combination switch unit 2 is a multi function switch unit comprising a variety of operation switches such as a lighting system operation switch, a wiper system operation switch and a turn signal operation switch etc., part of which will be described in more detail below.

The combination switch unit 2 is connected to an external hazard switch 3, an ignition switch 4 and a battery 5 forming a direct current source.

A further hazard switch 23 forms part of the combination switch unit 2. Thus it can be easily operated by the driver of the vehicle. Contrarily, the external hazard switch 3 is mounted in a region of the vehicle, where it can be operated by a person sitting on a seat other that the driver's seat, e.g. in the vicinity of a center console of the vehicle.

The combination switch unit 2 further includes a flasher module 21. The latter comprises a flasher circuit 21A, semiconductor switches 21 R, 21 L, a turn signal switch 22, and an electric current detection resistor 24 and controls a sound source 25.

The flasher circuit 21 A is a circuit for controlling the semiconductor switches 21 R, 21 L and the sound source 25 in response to the status of the signals inputed from the turn signal switch 22, the hazard switches 3, 23 and the electric current detection resistor 24.

More specifically, the flasher circuit 21 A has a function of outputting an intermittent signal to the right side semiconductor switch 21 R in response to receipt of an ON operation signal provided by a right side contact 22R of the turn signal switch 22. Under such circumstances thus the right side direction indication lamps 1 R are turned on intermittently thus indicating the direction to which the driver intends to turn. The flasher circuit 21 A furthermore outputs an intermittent signal to the sound source 25 to generate a turn signal actuation sound. When the flasher circuit 21 A receives an ON operation signal from a left side contact 22L of the turn signal switch 22 it outputs an intermittent control signal to the left side semiconductor switch 21 L. Thus the left side direction indication lamps 1L are turned on and their flashing indicates the direction the driver of the vehicle intends to take. At the same time an intermittent signal is output to the sound source 25 to again generate a turn signal actuation sound.

The flasher circuit 21A is alternately switched between a hazard flashing mode and an OFF mode each time it inputs an ON operation signal from any of the hazard switches 3, 23. In the hazard flashing mode the flasher circuit 21A has the function of outputting an intermittent signal to both of the semiconductor switches 21R, 21L to simultaneously flash the left and right hand direction indication lamps 1R, 1L (hazard flashing). If the flasher circuit 21A is in the OFF mode it does not output such intermittent signal and hence both groups of lamps 1R and 1L are put out. In this embodiment the flasher circuit 21 A does not output a signal to the sound source 25 in its hazard flashing mode or its OFF mode. Consequently the sound source 25 does not generate any actuation sound in these two operation modes.

The flasher circuit 21A further has a function of detecting a voltage drop at both ends of the electric current detection resistor 24 and judges that the direction indication lamps 1R and 1L are disconnected or not operable when the level of the voltage drop is less than a predetermined voltage drop at times, when the flasher circuit 21A controls one of the semiconductor switches ito its closed state. Upon detecting presence of such conditions the flasher circuit 21A alters the period of the intermittent signal output to the semiconductor switches 21R, 21L thus providing an alarm to the driver who thus is informed of the malfunction (lamp burnout or lamp disconnection).

The semiconductor switches 21R and 21L use a MOS FET and are united with the flasher circuit 21 A to form the flasher module 21.

The turn signal switch 22 is a switch which is put into its ON/OFF positions by means of a lever (not shown) carried by the housing of the combination switch unit 2 for pivotal movement. The turn signal switch 22 includes the right side contact 22R and the left side contact 22L. The hazard switch 23 is a switch which is constructed with automatic return switches and which is provided on the top end of the turn signal lever or on the upper portion of the housing of the combination switch unit. The electric current detection resistor 24 has a low resistance in view of obtaining a voltage drop of about 100 mV, which is proportional to the current flowing through the direction indication lamps 1R, 1L.

The electronic flasher system shown in figure 1 operates as follows:

When the ignition switch 4 is in the ON operation state, the flash circuit 21A upon inputting an ON operation signal from the right side contact 22R of the turn signal switch 22, for example, will output an intermittent signal to the right side semiconductor switch 21R. The latter will thus intermittently supply electric current to the right side direction indication lamps 1R, thus providing the flashing turn signal. The flash circuit 21A further outputs an intermittent signal to the sound source 25 to generate a turn signal actuation sound. When the flasher circuit 21A receives an ON operation signal from the left side contact 22L of the turn signal switch 22, it outputs an intermittent signal to the left side semiconductor switch 21L. Thus the left side direction indication lamps 1L are energized intermittently to again provide a corresponding flashing turn signal.Again the flasher circuit 21A also outputs an intermittent signal to the sound source 25 to generate a turn signal actuation sound.

Whenever any of the hazard switches 3, 23 is turned ON, the flasher circuit 21A is set into the hazard flashing mode. It will then provide an intermittent signal to both of the semiconductor switches 21R, 21L, which thus intermittently energize both the left and right hand direction indication lamps 1R, 1L for hazard flashing. Under such conditions the flasher circuit 21A will not output a signal to the sound source 25 which thus remains in silent state. Whenever any of the hazard switches 3, 23 is again turned ON, the flasher 21A is switched to the OFF mode and hence both groups of lamps 1R and 1L are put out.

The flasher circuit 21A monitors the voltage drop across the two terminals of the electric current detection resistor 24 during lighting or energizing times, where the direction indication lamps 1R, 1L are controlled in the turn signal flashing or the hazard flashing mode. From this voltage drop the flasher circuit 21A recognizes the fact that the direction indication lamps 1R, 1L are not properly working (either due to burnout or due to disconnection), the voltage drop in such case becoming less than a predetermined voltage drop. Upon detecting such a situation the flasher circuit 21A alters the period of the intermittent signal output to the semiconductor switches 21R, 21L.

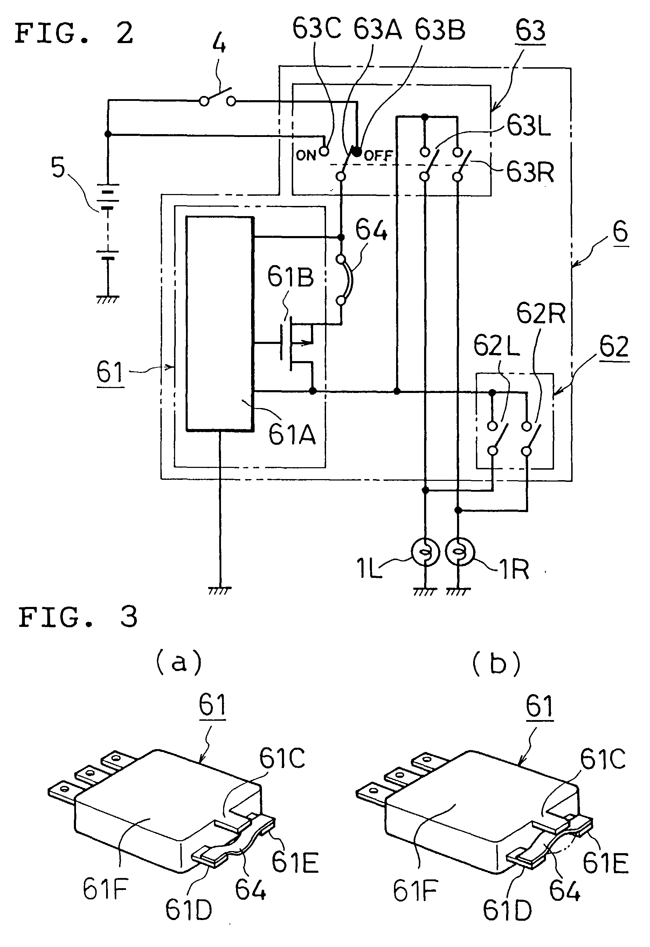

In the second electronic flasher system shown in figure 2 identical reference numerals have been applied to parts corresponding to parts already described in connection with the first electronic flasher system. As to the detailed description of these components reference to the above text is made.

A combination switch unit 6, like the combination switch unit 2 of figure 1 is a multi function switch formed by various operation switches such as a lighting system operation switch, a wiper system operation switch and a turn signal system operation switch. The combination switch unit includes a flasher circuit 61A, a semiconductor switch 61B, a turn signal switch 62, a hazard switch 63 and an electric current detection resistor 64, which also serves as the sound source.

The flasher circuit 61A and the semiconductor switch 61B form a flasher module 61.

The flasher circuit 61A is a circuit for controlling the semiconductor switch 61B in response to the status of signals input from the turn signal switch 62, the hazard switch 63 and the electric current detection resistor 64.

More specifically, the flasher circuit 61A outputs an intermittent signal to the semiconductor switch 61B whenever receiving an ON operation signal from a right side contact 62R or a left side contact 62L of the turn signal switch 62.

The flasher circuit 61A is switched to a hazard flashing mode when receiving an ON operation signal from the hazard switch 63 and is switched to an OFF mode when receiving an OFF operation signal. The flasher circuit 61A has the function of outputting an intermittent signal to the semiconductor switch 61B to simultaneously supply current to the left hand and right hand direction indication lamps 1R, 1L to provide hazard flashing in its hazard flashing mode. The flasher circuit 61A will not output such intermittent signal to the direction indication lamps 1R, 1L when it is in its OFF mode.

The flasher circuit 61A monitors the voltage drop across the terminals of the electric current detection resistor 64. From the level of this voltage drop the flasher circuit 61A recognizes that one or more of the direction indication lamps 1R, 1L are not working properly (lamp burnout or disconnection), when the level of the voltage drop is less than a predetermined voltage drop. Upon detection of such a situation the flasher circuit 61A alters the period of the intermittent signal output to the semiconductor switch 61B thus informing the user of the vehicle of the malfunction.

The semiconductor swith 61B uses a MOS FET and is united with the flasher circuit 61A to form the flasher module 61. The flasher module 61 has a housing 61 F having a projecting abutment member 61C formed integral therewith as may be seen from figure 3. The housing 61F carries terminals 61D, 61E projecting therefrom and electrically connected to the semiconductor switch 61B and the flasher circuit 61A, which are arranged inside the housing 61F.

The turn signal switch 62 is a switch that is set into it's ON/OFF state by actuating a lever (not shown) carried by the housing (not shown) of the combination switch unit 6. The turn signal switch 62 has a right side contact 62R and a left side contact 62L.

The hazard switch 63 is a switch comprising a tumbler switch or the like and it is arranged on an instrument panel or the like. The hazard switch 63 has a right side contact 63R, a left side contact 63L, a movable contact 63A, a normally closed contact 63B and a normally open contact 63C.

The electric current detection resistor 64 is designed so as to have low resistance such that a voltage drop of about 100 mV proportional to currents flowing through the direction indication lamps 1R, 1L is obtained. More specifically, the electric current detection resistor 64 is formed as a bimetal structure, i.e. it comprises metal plates having different thermal expansion coefficients and being joined to each other into a two layer structure. In this structure that one of the layers having the larger thermal expansion coefficient is arranged so as to face the projecting abutment member 61C. The bimetal structure is bent such that it is curved away from the projecting abutment member 61C under no current conditions. The bimetal structure is welded to the terminals 61D, 61E of the flasher module 61 as may be seen from figure 3 (a).

When the electric current detection resistor 64 is heated by electric current flowing therethrough and flowing through the direction indication lamps 1R, 1L, its geometry is reversed as illustrated in figure 3 (b). Due to this change of geometry of the current detection resistor 64 it will collide with the projecting abutment member 61C.

The second electronic flasher system shown in figure 3 operates as follows:

When the ignition switch 4 is in its ON-operation state and when the hazard switch 63 is in its OFF-state, the flasher circuit 61A will operate in the turn signal mode. Under such conditions when receiving an ON operation signal from the right side contact 62R of the left side contact 62L of the signal switch 62, the flasher circuit 61A will output an intermittent signal to the semiconductor switch 61B. Consequently, when the right side contact 62R is turned ON, the right side direction indication lamps 1R are energized and provide corresponding turn signal flashing. If under such conditions the left side contact 62L is turned on, the left side direction indication lamps 1L are energized to provide for left turn signal flashing. Simultaneously, the electric current detection resistor 64 is heated by the current flowing to the right side direction indication lamps 1R or the left side direction indication lamps 1L. Due to its bimetal structure it is deformed, and the electric current detection resistor hits the projecting abutment member 61C of the housing 61 F in each of the lighting periods. Thus a series of striking sounds is produced which forms an actuation sound informing the driver of the vehicle on the operation of the flasher system.

When the hazard switch 63 is turned ON, the right side and left side contacts 63R and 63L are both turned ON. Simultaneously the movable contact 63A is connected with the normally open contact 63C. Due to this fact the flasher circuit 61A is set into the hazard flashing mode, whereby it outputs an intermittent signal to the semiconductor switch 61B. The latter will thus energize both the left and right hand direction indication lamps 1R, 1L to provide for hazard flashing. As the hazard switch 63 is turned OFF, the flasher circuit 61A is switched to the OFF mode to put out both groups of lamps 1R, 1L.

The flasher circuit 61A monitors the voltage drop across the two terminals of the electric current detection resistor 64, which, as already pointed out, also serves as a sound source providing striking sounds in the lighting times, when the direction indication lamps 1R, 1L are energized to provide for turn signal flashing or hazard flashing. When the level of the voltage drop is less than a predetermined voltage drop, the flasher circuit 61A recognizes that the direction indication lamps 1R, 1L are not working properly (due to burnout or disconnection) and alters the period of the intermittent signal output to the semiconductor switch 61B.

From the above description of preferred embodiments it may be seen that the electronic flasher unit in accordance with the invention informs the driver of the vehicle on the working of the flasher system by means of an acoustic signal being similar to the sound produced by prior art relay based flasher units.

The hazard flashing mode may be started and terminated by actuating one of a plurality of hazard switches, at least one of which is readily accessible for the driver and at least one of which is readily accessible to a person not sitting in the driver's seat.

The flasher unit in accordance with the present invention is compact and can be arranged in the housing of a combination switch mounted on the steering column of a vehicle.

No external component is needed for generating the acoustic signal informing the driver of eventual malfunction of the flasher system.

In the flasher system shown in figure 2, no separate sound source is needed, since due to the bimetal structure of the current detection resistor and cooperation of the latter with the projecting abutment member 61C striking noises are automatically generated by the intermittent current supplied to the direction indication lamps.

Since the electric current detection resistor 64 is welded to the terminals of the flasher module 61 which comprises the semiconductor switch 61B and the flasher circuit 61A one obtains a very compact structure of the overall flasher unit. There is only little expense to provide for the abutment member 61C cooperating with the deformable portion of the current detection resistor 64 for generating striking sounds. Thus the housing 61F contributes to generation of this striking sound and forms some resonating body increasing and effectively radiating these striking sounds.

In the electronic flasher system shown in figure 1, the sound source 25 is activated only in the turn flashing mode of the flasher circuit 21A. Thus the driver is acoustically informed on the momentarily established mode of operation of the flasher circuit 21A: if sound is heard by the driver he knows that the flasher circuit 21A is in the turn signal flashing mode. In this embodiment no actuation sound is generated in the hazard flashing mode.

## Claims

1. An electronic flasher control unit (2; 6) connectable to direction indication lamps (1R, 1L) of a vehicle comprising semiconductor switch means (21L, 21R; 61 B) controlling current supply from a current source (5) to the direction indication lamps (1R, 1L), comprising a flasher circuit (21A; 61A) supplying an intermittent switch control signal to the semiconductor switch means (21L, 21R; 61B) and having input terminals, one of which is connectable to a turn signal switch (22L, 22R; 62) and the other of which is connectable to hazard switch means (3, 23; 63) the flasher circuit (21A; 61A) being designed such that it intermittently actuates the semiconductor switch means (21L, 21R; 61B) in response to operation of the turn signal switch (22; 62) and the hazard switch means (3, 23; 63) such that the direction indication lamps (1R, 1L) are energized for turn signal flashing and hazard flashing, respectively, characterized by a sound source (25; 61C, 64) generating sound, when the direction indication lamps (1R, 1L) are energized for turn signal flashing.

2. The electronic flasher unit in accordance with claim 1, characterized in that the sound source (25; 61C, 64) generates sound also, when the signal direction indication lamps (1R, 1L) are energized for hazard flashing.

3. The electronic flasher unit in accordance with claim 1 or 2, characterized in that the sound source (25; 61C, 64) generates sound intermittently in synchronism with the supply of current to the direction indication lamps (1R, 1L).

4. The flasher unit as in one of claims 1 to 3, characterized in that the sound source (65) is connected in series with the semiconductor switch means (61B).

5. The electronic flasher unit in accordance with claim 4, characterized in that the sound source (61C, 64) also forms a current sensor and is connected to a current sensing input terminal of the flasher circuit (61A).

6. The electronic flasher unit as in one of claims 4 to 6, characterized in that the sound source (64) comprises a bimetal member (64).

7. The electronic flasher unit in accordance with claim 6, characterized in that the sound source (61C, 64) comprises a protrusion (61C) arranged in the path of a portion of the bimetal member (64) which deformes upon current flowing through the bimetal member, a striking sound thus being generated upon the bimetal member (64) colliding with the protrusion (61C).

8. The electronic flasher unit unit as in claim 7, characterized in that the semiconductor switch means (61B) is arranged in said housing (61) carrying said protrusion (61C).

9. The electronic flasher unit as in one of claims 1 to 8, characterized in that the hazard switch means comprise a first hazard switch (3) which is mounted on a housing of a combination switch unit (2) adapted to be mounted on a stearing column of the vehicle and as well as a second hazard switch means (23) to independently control the flasher circuit (21A) into the hazard flashing mode, which second hazard switch (23) is designed for mounting in a range of the vehicle such that a person sitting at a location being different from the driver's seat can operate it.

10. The electronic flasher unit in accordance to claim 8, characterized in that the flasher circuit (21A) is designed such that it is alternately switched between its hazard flashing mode and an OFF mode by successive signals output from any of said first and second hazard switches (3, 23).

11. The electronic flasher unit in accordance with one of claims 1 to 10, characterized in that a flasher module (21; 61) comprising the semiconductor switch means (21R, 21L; 61B) and the flasher circuit (21A; 61A) forms part of a combination switch unit (2; 6).
